# EUROPÄISCHE PATENTSCHRIFT

(11) **EP 3 215 420 B1**
(45) Veröffentlichungstag und Bekanntmachung des Hinweises auf die Patenterteilung: **24.03.2021**
(21) Anmeldenummer: 15790108.3
(22) Anmeldetag: 02.11.2015
(51) Int. Cl.: B65B 1/02, B65B 65/00, B29C 43/04, B29C 43/08, C11D 17/04, B65D 65/46, B65B 47/04, B65B 47/02, B65B 5/02, B65B 7/16, B65B 3/02, B29C 43/36

(54) **WASSERLÖSLICHER BEHÄLTER UND VERFAHREN ZUR HERSTELLUNG**
WATER-SOLUBLE CONTAINER AND METHOD FOR THE PRODUCTION THEREOF
CONTENANT HYDROSOLUBLE ET PROCÉDÉ DE FABRICATION DUDIT CONTENANT

(30) Priorität: 05.11.2014 DE 102014222602
(43) Veröffentlichungstag der Anmeldung: 13.09.2017
(73) Patentinhaber: Henkel AG & Co. KGaA, 40589 Düsseldorf (DE)
(72) Erfinder: HENNING, Ingomar, 51588 Nümbrecht (DE)
(86) Internationale Anmeldenummer: PCT/EP2015/075489
(87) Internationale Veröffentlichungsnummer: WO 2016/071294

(56) Entgegenhaltungen:
- WO-A1-02/085707
- WO-A1-2006/018108
- WO-A1-2007/057653

## Beschreibung

Die vorliegende Erfindung betrifft ein Verfahren zur Herstellung eines Behälters für Wasch- und/oder Reinigungsmittel aus einem wasserlöslichen Material sowie ein Behälter, der nach dem erfindungsgemäßen Verfahren erhalten wurde.

Heutzutage werden Wasch- und/oder Reinigungsmittel häufig in vorkonfektionierten Behältern bereitgestellt. Hierdurch können Wirkstoffe voneinander getrennt verpackt werden. Weiterhin ist die Dosierung für einen Wasch- oder Reinigungsgang optimal. Damit die enthaltenen Wasch- und/oder Reinigungsmittel dann auch wirksam mit den zu reinigenden Gegenständen in Kontakt kommen, müssen die jeweiligen Behälter wasserlöslich sein. Wasserlöslich im Sinne der vorliegenden Erfindung bedeutet, dass sich das Material in Wasser auflöst oder darin dispergiert.

Zur Herstellung und räumlichen Ausgestaltung dieser wasserlöslichen Verpackungen werden unterschiedliche Verfahren vorgeschlagen. So offenbart EP 1 776 448 B1 das Tiefziehen einer Folie, wohingegen EP 1 390 270 B1 das Spritzgussverfahren als mögliches Herstellungsverfahren beschreibt.

Das Spritzgussverfahren umfasst die Schritte des Verflüssigens des Materials, welches dann in eine Form unter Druck eingebracht wird. In dieser Form geht der Werkstoff durch Abkühlung oder eine Vernetzungsreaktion wieder in den festen Zustand über und kann nach dem Öffnen des Werkzeuges als Fertigteil entnommen werden. Mit diesem Verfahren lassen sich Formteile in großer Stückzahl kostengünstig herstellen. Es werden jedoch Werkzeuge benötigt, in welchen der eigentliche Werkstoff eingespritzt wird. Der Wechsel einer Form ist hier immer mit der Änderung des gesamten Werkzeuges verbunden, was zu einem hohen Kostenaufwand führt.

Neben der eigentlichen Herstellung des Behälters ist auch von Interesse, dass dieser Behälter möglichst einfach mit einem Füllgut und insbesondere mit Wasch- und/oder Reinigungsmitteln befüllt werden kann. Diese Wasch- und/oder Reinigungsmittel liegen üblicherweise als Flüssigkeit, Gele, Pasten oder Pulver vor. Diese sollten möglichst unkompliziert in den Behälter eingefügt werden können. Insbesondere wäre wünschenswert, wenn das Herstellungsverfahren des Behälters mit dem des Einfüllens des Mittels unkompliziert miteinander verbunden werden könnter Das Dokument WO 2007/057653 A1 offenbart ein weiteres Verfahren zur Herstellung und räumlichen Ausgestaltung einer wasserlöslichen Verpackung.

Überraschenderweise hat sich gezeigt, dass mittels Formpressen ("compression molding") die Nachteile aus dem Stand der Technik vermieden werden können. In einer ersten Ausführungsform wird daher die der vorliegenden Erfindung zugrundeliegende Aufgabe gelöst durch ein Verfahren zur Herstellung eines Behälters für ein Füllgut und insbesondere für Wasch- und/oder Reinigungsmittel aus einem wasserlöslichen Material umfassend
a) Einbringen des wasserlöslichen Materials in ein Unterteil (C) eines Werkzeuges (A),
b) gegebenenfalls Temperieren des Werkzeuges (A) und
c) Schließen des Werkzeuges (A) durch Aufbringen eines Oberteils (B) des Werkzeuges (A) auf das Unterteil (C) und Aufbau von Druck zur Ausformung des Behälters, und
d) Befüllen des Behälters mit wenigstens einem Füllgut,
wobei es sich um ein Verfahren auf dem Gebiet des Formpressens handelt und wobei es sich um einen Behälter handelt, welcher durch ein Befüllen in seiner Form nicht verändert wird, wobei der Behälter beim Befüllen im Werkzeug (A) verbleibt und der Behälter beim Abfüllen eine Temperatur im Bereich von 20 °C bis 120 °C, bevorzugt von 30 °c bis 100 °C aufweist, wobei die Temperatur 20 °C über der Temperatur liegt, bei der der Behälter durch das Befüllen in seiner Form nicht verändert wird.

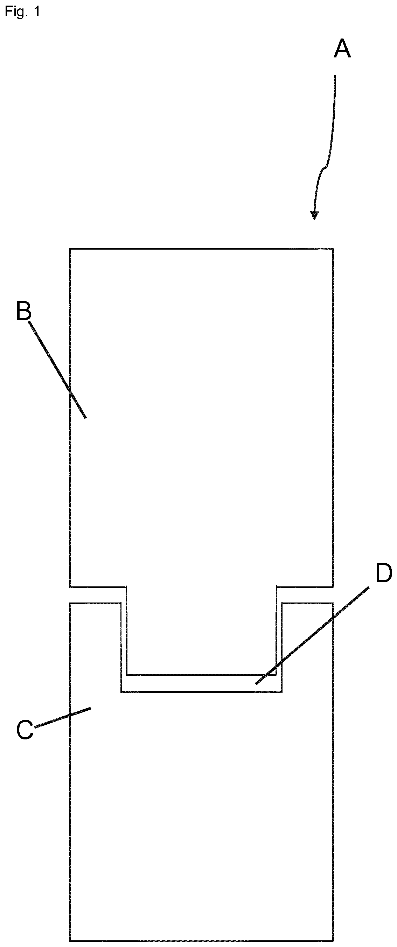

Im erfindungsgemäßen Verfahren wird somit zunächst das Material, aus dem der Behälter geformt wird, in das Unterteil (C) eines Werkzeuges (A) eingebracht. Ein Werkzeug (A) im Sinne der vorliegenden Erfindung umfasst ein Oberteil (B) und ein Unterteil (C). Zwischen Oberteil (B) und Unterteil (C) befindet sich im geschlossenen Zustand des Werkzeuges (A), wie er in Fig. 1 schematisch dargestellt ist, ein Hohlraum (D). Dieser Hohlraum (D) bestimmt die spätere Form des Behälters. Zum Befüllen des Werkzeuges (A) wird das Oberteil (B) vom Unterteil (C) getrennt, so dass das wasserlösliche Material in das Unterteil (C) eingebracht werden kann, ohne dass das Oberteil (B) räumlich daran hindert. Nach dem Einbringen des wasserlöslichen Materials in das Unterteil (C) des Werkzeuges (A), wird das Werkzeug geschlossen. Das heißt, das Oberteil (B) wird auf das Unterteil (C) aufgebracht und durch Aufbau von Druck wird das wasserlösliche Material in die Form gebracht, die durch den Hohlraum (D) vorgegeben ist, Dabei ist es möglich, dass das Werkzeug (A) aus mehreren einzelnen Bestandteilen besteht, die unabhängig voneinander ausgetauscht werden können. Es ist jedoch auch möglich, dass das Werkzeug (A) einstückig ausgestaltet ist, also Oberteil (B) und Unterteil (C) beweglich miteinander verbunden sind.

Das wasserlösliche Material kann beispielsweise in Form von Granulat oder Pulver vorliegen. Es kann beispielsweise in einem Extruder plastifiziert und mittels dieses Extruders dann in das Unterteil (C) des Werkzeuges (A) eingebracht werden.

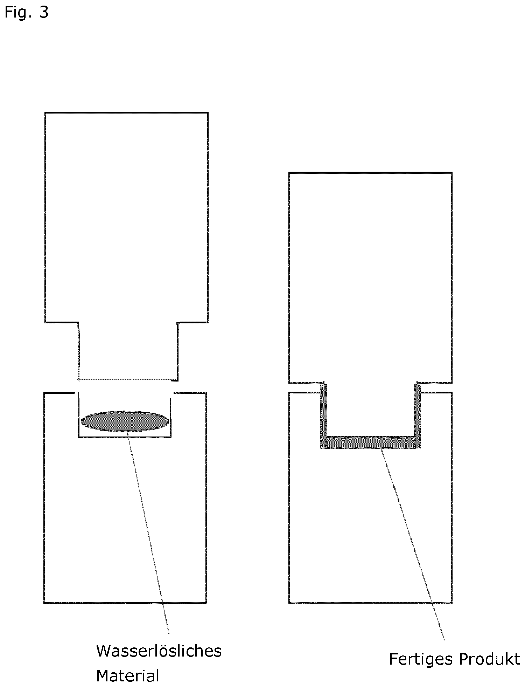

Wenn das wasserlösliche Material in das Werkzeug (A) eingebracht wird, wird dieses gegebenenfalls temperiert. Temperieren im Sinne der vorliegenden Erfindung bedeutet das Halten der Temperatur in einem bestimmten Bereich. Dies kann auch die Abfuhr von überschüssiger Wärme bedeuten. Wird das Werkzeug (A) unter Druck geschlossen, kommt es zu einer Temperaturerhöhung. Die hierdurch entstehende Wärme kann beispielsweise durch das Temperieren des Werkzeuges (A) abgeführt werden.
Durch das Schließen des Werkzeuges (A) unter Druck nimmt das Material die Form des Hohlraumes (D) an. Jegliche strukturelle Ausgestaltung des Hohlraumes (D) bestimmt Form und Aussehen des hergestellten Behälters. Schematisch ist dies in Fig. 3 dargestellt.

Das Material, welches in das Werkzeug (A) eingebracht wird, ist auf eine solche Temperatur erwärmt, dass es fließfähig ist. Fließfähig im Sinne der vorliegenden Erfindung bedeutet, dass das Material mittels Formpressen in eine definierte 3-dimensionale Form gebracht werden kann. Vorzugsweise wird das Material auf eine Temperatur erwärmt, die über der Schmelztemperatur des wasserlöslichen Materials liegt. Insbesondere wird das Material auf eine solche Temperatur erwärmt, die die Schmelztemperatur des wasserlöslichen Materials um 20 °C bis 30 °C überschreitet.

Das Material kann beispielsweise mittels eines Extruders auf eine Temperatur erwärmt werden, bei welcher es fließfähig ist. Durch das Schließen der Kavität wird eine Scherung induziert, wodurch es zu einer weiteren Temperaturerhöhung im Inneren des Werkzeuges (A) kommen kann. Diese zusätzliche Wärmemenge, aber auch die Wärme bis zum Erstarrungspunkt, ab dem eine Entformungsstabilität erreicht wird, kann dann von dem Werkzeug (A) abgeführt werden, worunter eine Temperierung im Sinne der vorliegenden Erfindung zu verstehen ist. Die Schritte b) und c) des erfindungsgemäßen Verfahrens können daher auch gleichzeitig stattfinden.

Gegenüber dem Spritzgussverfahren sind die erfindungsgemäß zur Formgebung notwendigen Temperaturen um etwa 20 °C bis 30 °C geringer. Dies bedeutet einerseits einen geringeren Energieaufwand bei der Herstellung. Weiterhin ist die Wahl der möglichen Ausgangsstoffe flexibler zu gestalten.

Als wasserlösliches Material kann ein im Stand der Technik bekanntes wasserlösliches Material eingesetzt werden. Wasserlösliche Polymere im Sinne der Erfindung sind solche Polymere, die bei Raumtemperatur in Wasser zu mehr als 2,5 Gew.-% löslich sind.

Das wasserlösliche oder wasserdispergierbare Material kann ein Polymer, ein Copolymer oder Mischungen dieser umfassen. Bevorzugte wasserlösliche Materialien umfassen vorzugsweise mindestens anteilsweise wenigstens eine Substanz aus der Gruppe bestehend aus (acetalisierter) Polyvinylalkohol, Polyvinylpyrrolidon, Polyethylenoxid, Gelatine, mit Sulfat, Carbonat und/oder Citrat substituierte Polyvinylalkohole, Polyvinylpyrrolidone, Polyalkylenoxide, Acrylamide, Celluloseester, Celluloseether, Celluloseamide, Cellulose und deren Derivate (wie beispielsweise Hydroxypropylmethylcellulose), Polyvinylacetate, Polycarbonsäuren und deren Salze, Polyaminosäuren oder Peptide, Polyamide, Polyacrylamide, Copolymere von Maleinsäure und Acrylsäure, Copolymere von Acrylamiden und (Meth)Acrylsäure, Polysaccharide, wie beispielsweise Stärke oder Guar-Derivate, Gelatine und die unter den INCI Bezeichnungen Polyquaternium 2, Polyquaternium 17, Polyquaternium 18 und Polyquaternium 27 bekannten Polymere. Besonders bevorzugt ist das wasserlösliche Material ein Polyvinylalkohol.

In einer Ausführungsform der Erfindung umfasst das wasserlösliche Material Mischungen unterschiedlicher Substanzen. Solche Mischungen ermöglichen die Einstellung der mechanischen Eigenschaften des Behälters und können den Grad der Wasserlöslichkeit beeinflussen.

"Polyvinylalkohole" (Kurzzeichen PVAL, gelegentlich auch PVOH) ist dabei die Bezeichnung für Polymere der allgemeinen Struktur 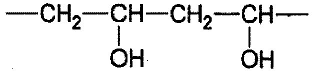 die in geringen Anteilen (ca. 2%) auch Struktureinheiten des Typs 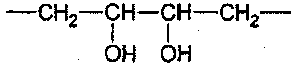 enthalten.

Handelsübliche Polyvinylalkohole, die als weiß-gelbliche Pulver oder Granulate mit Polymerisationsgraden im Bereich von ca. 100 bis 2500 (Molmassen von ca. 4000 bis 100.000 g/mol) angeboten werden, haben Hydrolysegrade von 98-99 beziehungsweise 87-89 Mol-%, enthalten also noch einen Restgehalt an Acetyl-Gruppen. Charakterisiert werden die Polyvinylalkohole von Seiten der Hersteller durch Angabe des Polymerisationsgrades des Ausgangspolymeren, des Hydrolysegrades, der Verseifungszahl beziehungsweise der Lösungsviskosität.

Polyvinylalkohole sind abhängig vom Hydrolysegrad löslich in Wasser und wenigen stark polaren organischen Lösungsmitteln (Formamid, Dimethylformamid, Dimethylsulfoxid); von (chlorierten) Kohlenwasserstoffen, Estern, Fetten und Ölen werden sie nicht angegriffen. Polyvinylalkohole werden als toxikologisch unbedenklich eingestuft und sind biologisch zumindest teilweise abbaubar. Die Wasserlöslichkeit kann man durch Nachbehandlung mit Aldehyden (Acetalisierung), durch Komplexierung mit Ni- oder Cu-Salzen oder durch Behandlung mit Dichromaten, Borsäure od. Borax verringern. Die Beschichtungen aus Polyvinylalkohol sind weitgehend undurchdringlich für Gase wie Sauerstoff, Stickstoff, Helium, Wasserstoff, Kohlendioxid, lassen jedoch Wasserdampf hindurchtreten.

Im Rahmen der vorliegenden Erfindung ist es bevorzugt, dass das wasserlösliche Material wenigstens anteilsweise einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% beträgt. In einer bevorzugten Ausführungsform besteht das wasserlösliche Material zu mindestens 20 Gew.-%, besonders bevorzugt zu mindestens 40 Gew.-%, ganz besonders bevorzugt zu mindestens 60 Gew.-% und insbesondere zu mindestens 80 Gew.-% aus einem Polyvinylalkohol, dessen Hydrolysegrad 70 bis 100 Mol-%, vorzugsweise 80 bis 90 Mol%, besonders bevorzugt 81 bis 89 Mol-% und insbesondere 82 bis 88 Mol% beträgt.

Die vorstehend beschriebenen Polyvinylalkohole sind kommerziell breit verfügbar, beispielsweise unter dem Warenzeichen Mowiol® (Clariant). Im Rahmen der vorliegenden Erfindung besonders geeignete Polyvinylalkohole sind beispielsweise Mowiole 3-83, Mowiol® 4-88, Mowiol® 5-88, Mowiol® 8-88 sowie L648, L734, Mowiflex LPTC 221 ex KSE sowie die Compounds der Firma Texas Polymers wie beispielsweise Vinex 2034.

Die Wasserlöslichkeit von PVAL kann durch Nachbehandlung mit Aldehyden (Acetalisierung) oder Ketonen (Ketalisierung) verändert werden. Als besonders bevorzugt und aufgrund ihrer ausgesprochen guten Kaltwasserlöslichkeit besonders vorteilhaft haben sich hierbei Polyvinylalkohole herausgestellt, die mit den Aldehyd beziehungsweise Ketogruppen von Sacchariden oder Polysacchariden oder Mischungen hiervon acetalisiert beziehungsweise ketalisiert werden. Als äußerst vorteilhaft einzusetzen sind die Reaktionsprodukte aus PVAL und Stärke.

Weiterhin lässt sich die Wasserlöslichkeit durch Komplexierung mit Ni- oder Cu-Salzen oder durch Behandlung mit Dichromaten, Borsäure, Borax verändern und so gezielt auf gewünschte Werte einstellen. Folien aus PVAL sind weitgehend undurchdringlich für Gase wie Sauerstoff, Stickstoff, Helium, Wasserstoff, Kohlendioxid, lassen jedoch Wasserdampf hindurchtreten.

Bevorzugte wasserlösliche Materialien sind dadurch gekennzeichnet, dass sie Hydroxypropylmethylcellulose (HPMC) umfassen, die einen Substitutionsgrad (durchschnittliche Anzahl von Methoxygruppen pro Anhydroglucose-Einheit der Cellulose) von 1,0 bis 2,0, vorzugsweise von 1,4 bis 1,9, und eine molare Substitution (durchschnittliche Anzahl von Hydroxypropoxylgruppen pro Anhydroglucose-Einheit der Cellulose) von 0,1 bis 0,3, vorzugsweise von 0,15 bis 0,25, aufweist.

Polyvinylpyrrolidone, kurz als PVP bezeichnet, werden durch radikalische Polymerisation von 1-Vinylpyrrolidon hergestellt. Handelsübliche PVP haben Molmassen im Bereich von ca. 2.500 bis 750.000 g/mol und werden als weiße, hygroskopische Pulver oder als wässrige Lösungen angeboten.

Polyethylenoxide, kurz PEOX, sind Polyalkylenglykole der allgemeinen Formel

H-[O-CH₂-CH₂]ₙ-OH

die technisch durch basisch katalysierte Polyaddition von Ethylenoxid (Oxiran) in meist geringe Mengen Wasser enthaltenden Systemen mit Ethylenglykol als Startmolekül hergestellt werden. Sie haben üblicherweise Molmassen im Bereich von ca. 200 bis 5.000.000 g/mol, entsprechend Polymerisationsgraden n von ca. 5 bis >100.000. Polyethylenoxide besitzen eine äußerst niedrige Konzentration an reaktiven Hydroxy-Endgruppen und zeigen nur noch schwache Glykol-Eigenschaften.

Gelatine ist ein Polypeptid (Molmasse: ca. 15.000 bis >250.000 g/mol), das vornehmlich durch Hydrolyse des in Haut und Knochen von Tieren enthaltenen Kollagens unter sauren oder alkalischen Bedingungen gewonnen wird. Die Aminosäuren-Zusammensetzung der Gelatine entspricht weitgehend der des Kollagens, aus dem sie gewonnen wurde, und variiert in Abhängigkeit von dessen Provenienz. Die Verwendung von Gelatine als wasserlösliches Hüllmaterial ist insbesondere in der Pharmazie in Form von Hart- oder Weichgelatinekapseln äußerst weit verbreitet. In Form von Folien findet Gelatine wegen ihres im Vergleich zu den vorstehend genannten Polymeren hohen Preises nur geringe Verwendung.

Bevorzugt sind im Rahmen der vorliegenden Erfindung wasserlösliche Materialien, welche ein Polymer aus der Gruppe Stärke und Stärkederivate, Cellulose und Cellulosederivate, insbesondere Methylcellulose und Mischungen hieraus umfassen.

Stärke ist ein Homoglykan, wobei die Glucose-Einheiten α-glykosidisch verknüpft sind. Stärke ist aus zwei Komponenten unterschiedlichen Molekulargewichts (MG) aufgebaut: aus ca. 20 bis 30% geradkettiger Amylose (MG ca. 50.000 bis 150.000) und 70 bis 80% verzweigtkettigem Amylopektin (MG. ca. 300.000 bis 2.000.000). Daneben sind noch geringe Mengen Lipide, Phosphorsäure und Kationen enthalten. Während die Amylose infolge der Bindung in 1,4-Stellung lange, schraubenförmige, verschlungene Ketten mit etwa 300 bis 1.200 Glucose-Molekülen bildet, verzweigt sich die Kette beim Amylopektin nach durchschnittlich 25 Glucose-Bausteinen durch 1,6-Bindung zu einem astähnlichen Gebilde mit etwa 1.500 bis 12.000 Molekülen Glucose. Neben reiner Stärke sind zur Herstellung wasserlöslicher Behälter im Rahmen der vorliegenden Erfindung auch Stärke-Derivate geeignet, die durch polymeranaloge Reaktionen aus Stärke erhältlich sind. Solche chemisch modifizierten Stärken umfassen dabei beispielsweise Produkte aus Veresterungen beziehungsweise Veretherungen, in denen Hydroxy-Wasserstoffatome substituiert wurden. Aber auch Stärken, in denen die Hydroxy-Gruppen gegen funktionelle Gruppen, die nicht über ein Sauerstoffatom gebunden sind, ersetzt wurden, lassen sich als Stärke-Derivate einsetzen. In die Gruppe der Stärke-Derivate fallen beispielsweise Alkalistärken, Carboxymethylstärke (CMS), Stärkeester und -ether sowie Aminostärken.

Reine Cellulose weist die formale Bruttozusammensetzung (C₆H₁₀0₅), auf und stellt formal betrachtet ein β-1,4-Polyacetal von Cellobiose dar, die ihrerseits aus zwei Molekülen Glucose aufgebaut ist. Geeignete Cellulosen bestehen dabei aus ca. 500 bis 5.000 Glucose-Einheiten und haben demzufolge durchschnittliche Molmassen von 50.000 bis 500.000. Als Desintegrationsmittel auf Cellulosebasis verwendbar sind im Rahmen der vorliegenden Erfindung auch Cellulose-Derivate, die durch polymeranaloge Reaktionen aus Cellulose erhältlich sind. Solche chemisch modifizierten Cellulosen umfassen dabei beispielsweise Produkte aus Veresterungen beziehungsweise Veretherungen, in denen Hydroxy-Wasserstoffatome substituiert wurden. Aber auch Cellulosen, in denen die Hydroxy-Gruppen gegen funktionelle Gruppen, die nicht über ein Sauerstoffatom gebunden sind, ersetzt wurden, lassen sich als Cellulose-Derivate einsetzen. In die Gruppe der Cellulose-Derivate fallen beispielsweise Alkalicellulosen, Carboxymethylcellulose (CMC), Celluloseester und - ether sowie Aminocellulosen.

Das wasserlösliche Material kann weitere Additive aufweisen. Hierbei handelt es sich beispielsweise um Weichmacher, wie beispielsweise Dipropylenglycol, Ethylenglycol oder Diethylenglycol, Wasser oder Aufschlussmittel.

Besonders bevorzugt wird Polyvinylalkohol als wasserlösliches Material eingesetzt. Dieses ist einerseits leicht zu verarbeiten und kostengünstig im Vergleich zu anderen wasserlöslichen Materialen zu erhalten. Zudem ist es besonders gut in Wasser löslich und ermöglicht so vielfältige Einsatzmöglichkeiten des hergestellten Behälters.

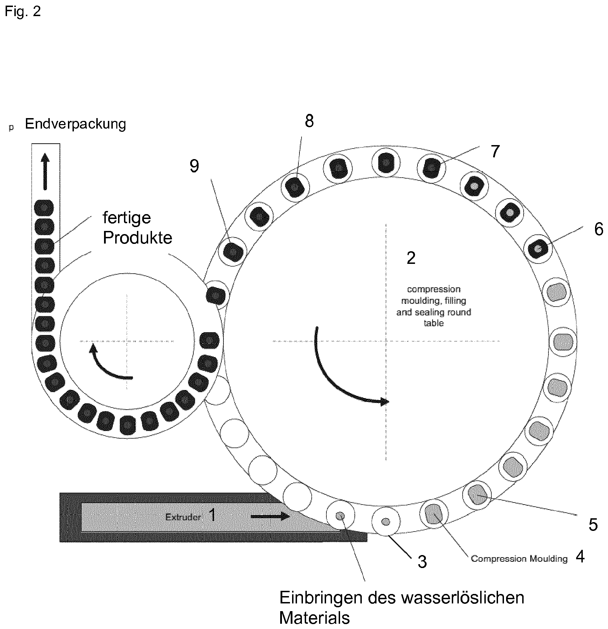

Das erfindungsgemäße Verfahren kann auf einem Rundläufer durchgeführt werden. Hierdurch sind die nach dem erfindungsgemäßen Verfahren hergestellten Behälter bereits optimal ausgerichtet, so dass eine Befüllung des Behälters direkt im Anschluss stattfinden kann. Das erfindungsgemäße Verfahren umfasst wenigstens einen Schritt d) des Befüllens des Behälters mit wenigstens einem Füllgut sowie vorzugsweise e) das anschließende Versiegeln des Behälters. In Fig. 2 ist eine entsprechende Vorrichtung schematisch gezeigt.

In Fig. 2 wird das wasserlösliche Material mittels eines Extruders (1) zum Rundläufer (2) transportiert. Die Art des Transportes ist von der Wahl des wasserlöslichen Materials abhängig. Liegt das Material beispielsweise als Pulver oder Granulat vor, so kann es beispielsweise mit Hilfe einer Schnecke, einem Fallrohr oder ähnlichen, dem Fachmann bekannten Vorrichtungen zum Rundläufer (2) hin transportiert werden. Bevorzugt wird das Material in einem Extruder erhitzt und kontinuierlich extrudiert. Ist ausreichend Material aus dem Extruder ausgetreten, kann dieses abgeschabt und in die Kavität gegeben werden.

Auf dem Rundläufer (2) befinden sich Werkzeuge (Kavitäten) (3), in welche das wasserlösliche Material eingebracht wird. Sobald eine der Kavitäten mit dem wasserlöslichen Material gefüllt ist, wird diese erwärmt und mit Hilfe eines Druckkolbens wird das wasserlösliche Material in die gewünscht Behälterform gebracht. Auf dem Rundläufer (2) schließt sich in einer bevorzugten Ausführungsform an diese Formpressstation (4) unmittelbar wenigsten eine Abkühlstation (5) an. Hier können die in der Formpressstation (4) hergestellten Behälter abkühlen, das heißt die Wärme, die beim Formpressen notwendig ist, an die Umgebung wieder abgeben. Eine aktive Kühlung ist nicht notwendigerweise erforderlich. Es ist aber auch möglich, die durch das Herstellungsverfahren noch warmen Werkzeuge (Kavitäten) (3) aktiv abzukühlen, beispielsweise mit Hilfe eines Gasstroms, insbesondere eines Luftstromes. Der Behälter wird dabei vorzugsweise auf eine Temperatur im Bereich von 20 °C bis 60 °C, insbesondere von 20°C bis 40 °C abgekühlt.

Hat der Behälter eine Temperatur erreicht, in der er formstabil ist, kann der Behälter auf dem Rundläufer (2) mit einem Füllmaterial in einer Abfüllstation (6) gefüllt werden. Der Behälter weist dabei eine Temperatur auf, die 20 °C über der Temperatur liegt, bei der er formstabil ist, der Behälter weist beim Abfüllen eine Temperatur im Bereich von 20°C bis 120 °C, bevorzugt von 30 °c bis 100 °C auf. Der Behälter kann erfindungsgemäß derart ausgestaltet sein, dass er in unterschiedlichen Bereichen unterschiedliche Füllmaterialien aufweisen kann, die dann in dem Behälter nicht miteinander in Kontakt kommen. Daher ist es erfindungsgemäß möglich, dass der Rundläufer weitere Abfüllstationen (7, 8) aufweist, in welchen weitere Füllmaterialien in den Behälter eingebracht werden. Formstabil im Sinne der vorliegenden Erfindung bedeutet, dass der Behälter durch das Befüllen in seiner Form nicht verändert wird. Hierfür muss der Behälter eine Temperatur aufweisen, die unterhalb der Schmelztemperatur des wasserlöslichen Materials liegt. Es ist erfindungsgemäß jedoch nicht notwendig, dass der Behälter vollständig bis auf Raumtemperatur, also eine Temperatur von etwa 20°C abkühlt.

Erfindungsgemäß ist es somit möglich, den Behälter bereits dann zu füllen, wenn das Material noch nicht vollständig auf Raumtemperatur abgekühlt ist. Der Vorteil ist, dass das Formteil, also der Behälter in der Form, also dem Werkzeug (A), verbleibt und somit von diesem unterstützt wird. Durch das Befüllen der Behälter bei einer Temperatur, die über der Raumtemperatur liegt, können die Behälter durch das Füllmaterial (Füllgut) weiter abgekühlt werden. Durch das Füllmaterial oder Füllgut kann so auch eine aktive Wärmeaufnahme und damit eine aktive Kühlung des Behälters erfolgen. Dies ermöglicht eine raschere Herstellung gefüllter Behälter. Dabei ist die maximale Temperatur der Behälter, bei welcher diese befüllt werden können, einerseits vom wasserlöslichen Material und dessen Schmelztemperatur abhängig. Von Bedeutung ist aber auch das Material, mit welchem der Behälter befüllt wird (Füllmaterial, Füllgut). Handelt es sich hierbei um eine Flüssigkeit, liegt die Temperatur des Behälters unterhalb der Siedetemperatur der Flüssigkeit. Wird der Behälter mit einem Feststoff gefüllt, liegt die Temperatur des Behälters unterhalb der Schmelztemperatur des Feststoffs. Siedetemperatur beziehungsweise Schmelztemperatur werden dabei bevorzugt um wenigstens 10 °C, insbesondere um wenigstens 15 °C unterschritten.

Füllmaterial und Füllgut werden im Sinne der vorliegenden Erfindung synonym verwendet. Es handelt sich hierbei um Wasch- und/oder Reinigungsmittel, welche in fester oder flüssiger Form vorliegen. Der Behälter kann erfindungsgemäß nur einen Bereich aufweisen, in den das Füllmaterial eingebracht wird, Es ist aber auch möglich, dass der Behälter 2 oder mehrere Bereiche aufweist, die voneinander durch das wasserlösliche Material getrennt sind. In diese Bereiche können erfindungsgemäß unterschiedliche Füllmaterialien eingebracht werden. Dabei können in einem Bereich feste und flüssige Füllmaterialien eingebracht werden. Es ist jedoch auch möglich, dass in einen Bereich ein festes Füllmaterial und in einen anderen Bereich ein flüssiges Füllgut eingebracht wird.

Nachdem das Füllgut in den Behälter eingebracht wurde, kann der Behälter auf dem Rundläufer (2) versiegelt werden. Dies erfolgt vorzugsweise in einer geeigneten Versiegelungsstation (9). Anschließend kann der gefüllte Behälter vom Rundläufer (2) entfernt und einer Verpackungsstation (10) zugeführt werden.

Erfindungsgemäß ist es somit möglich, an einem Rundläufer (2) nicht nur Behälter herzustellen, sondern diese direkt zu befüllen und zu versiegeln. Dies ermöglicht kurze Zykluszeiten von weniger als 20 Sekunden, insbesondere von weniger als 8 Sekunden. Dabei können Zykluszeiten von 3 bis 8 Sekunden erreicht werden. Abhängig vom Produkt sind Zykluszeiten von 2 Sekunden realisierbar. Ein solches Inline-Abfüllen ist mit anderen, im Stand der Technik beschriebenen Verfahren nicht möglich.

Erfindungsgemäß ist es auch möglich, dass die erste Abfüllstation (6) und die gegebenenfalls weiteren Abfüllstationen (7,8) nicht an demselben Rundläufer (2) sind, an dem auch die Formgebung erfolgt. In dieser Ausführungsform wird der Behälter nach der Abkühlung in der Abkühlstation (5) vorzugsweise unmittelbar zu einem weiteren Rundläufer transportiert, an dem dann Abfüllstation und Versiegelungsstation vorhanden sind. Dabei erfolgt der Transport derart, dass die räumliche Anordnung der Behälter erhalten bleibt. Auf Grund des erfindungsgemäßen Verfahrens befinden sich die Behälter nach dem Abkühlen in einer Ausrichtung, die die direkte Befüllung mit einem oder mehreren Wasch- oder Reinigungsmittel ermöglicht. Diese Ausrichtung wird erfindungsgemäß während des Transports zu einem weiteren Rundläufer in dieser Ausführungsform beibehalten.

Rundläufer (2) im Sinne der vorliegenden Erfindung können beispielsweise Drehteller, Drehplatten oder andere sich kreisförmig drehende Vorrichtungen, auf welchen Kavitäten angebracht werden können, sein.

Dadurch, dass die hergestellten Behälter in dieser bevorzugten Ausführungsform nicht mehr bevorratet werden müssen, sondern direkt im Anschluss an die Herstellung befüllt werden können, kann der Materialeinsatz verringert werden. Der befüllte Behälter weist durch den Inhalt eine hohe Stabilität auf. Ein Ausschuss an Behältern, der durch eine Lagerung der leeren Behälter notwendig ist, ist hier nicht erforderlich. Daher ist das Verfahren gegenüber den im Stand der Technik bekannten Verfahren nachhaltig und effizient.

Neben der Integration der Abfüllstation ist auch eine Integration einer Versiegelstation (9) an demselben Rundläufer (2) oder an einer direkt folgenden Rundlaufstation möglich. Dies ermöglicht eine sehr effiziente und auch flexible Abfülllinien-Konfiguration.

Das erfindungsgemäße Verfahren ermöglicht daher eine optimale Verfahrensintegration und führt zu einem Inline-Abfüllprozess von der Primärverpackung bis zum Endprodukt. Eine Sekundärverpackung-Abstapelung kann einfach angeschlossen werden. Hierdurch werden Investitionskosten reduziert.

Im erfindungsgemäßen Verfahren kann durch einen einfachen Austausch des Oberteils (B) und/oder des Unterteils (C) des Werkzeuges (A) die Behälterform dem gewünschten Füllgut angepasst werden. Im erfindungsgemäßen Verfahren können auch unterschiedliche Werkzeuge (A), die schnell ausgetauscht werden können, miteinander kombiniert werden, so dass sich eine Vielzahl an Möglichkeiten für die räumliche Ausgestaltung des Behälters ergibt.

Die Versiegelung der Behälter im Anschluss an die Befüllung kann derart erfolgen, dass im Behälter vorgesehene Bereiche miteinander derart verbunden werden, dass das in einem sich durch die Versiegelung bildenden geschlossenen Hohlraum enthaltene Füllgut nicht mehr austreten kann. Es ist jedoch auch möglich, dass der Behälter mit einem weiteren wasserlöslichen Material verschlossen wird. Vorzugsweise ist das Material der Versiegelung mit dem des Behälters gleich.

Der Behälter, der nach dem erfindungsgemäßen Verfahren hergestellt wird, ist insbesondere formstabil. Dies bedeutet, dass der Behälter direkt nach dem eigentlichen Herstellungsverfahren noch vor dem Befüllen seine Form im Wesentlichen beibehält. Er ist nicht spröde. Wird Druck auf ihn ausgeübt, so zerbricht er nicht. Wird er über einen längeren Zeitraum gelagert, ist es jedoch möglich, dass er seine Form nicht vollständig behält und beispielsweise nach oben hin ausgerichtete Seitenwände nicht in ihrer vollständigen Höhe bestehen bleiben.

Das erfindungsgemäße Verfahren ermöglicht die Bereitstellung eines wasserlöslichen Behälters in beliebiger räumlicher Ausgestaltung. Entsprechende Behälter werden insbesondere als Behälter für Wasch- und/oder Reinigungsmittel verwendet.

## Patentansprüche

1. Verfahren zur Herstellung eines Behälters für Wasch- und/oder Reinigungsmittel aus einem wasserlöslichen Material umfassend
a) Einbringen des wasserlöslichen Materials in ein Unterteil (C) eines Werkzeuges (A),
b) gegebenenfalls Temperieren des Werkzeuges (A) und
c) Schließen des Werkzeuges (A) durch Aufbringen eines Oberteils (B) des Werkzeuges (A) auf das Unterteil (C) und Aufbau von Druck zur Ausformung des Behälters, und
d) Befüllen des Behälters mit wenigstens einem Füllgut,
wobei es sich um ein Verfahren auf dem Gebiet des Formpressens handelt und wobei es sich um einen Behälter handelt, welcher durch ein Befüllen in seiner Form nicht verändert wird, wobei der Behälter beim Befüllen im Werkzeug (A) verbleibt und das Verfahren **dadurch gekennzeichnet ist, dass**
der Behälter beim Abfüllen eine Temperatur im Bereich von 20 °C bis 120 °C, bevorzugt von 30 °c bis 100 °C aufweist, wobei die Temperatur 20 °C über der Temperatur liegt, bei der der Behälter durch das Befüllen in seiner Form nicht verändert wird.

2. Verfahren nach Anspruch 1, **dadurch gekennzeichnet, dass** man Polyvinylalkohol als wasserlösliches Material einsetzt.

3. Verfahren nach Anspruch 1 oder 2, weiterhin umfassend Versiegeln des Behälters.

4. Verfahren nach Anspruch 1, **dadurch gekennzeichnet, dass** das Füllgut ein Wasch- und/oder Reinigungsmittel umfasst insbesondere daraus besteht.

## Claims

1. A method for producing a container for washing and/or cleaning agents from a water-soluble material, comprising
a) introducing the water-soluble material into a lower part (C) of a mold (A),
b) optionally controlling the temperature of the mold (A), and
c) closing the mold (A) by attaching an upper part (B) of the mold (A) to the lower part (C) and building up pressure to shape the container, and
d) filling the container with at least one filling material, the method being a method in the field of compression molding and the container being a container of which the shape is not changed by filling, the container remaining in the mold (A) during filling and the method being **characterized in that**, during filling, the container has a temperature in the range of from 20 °C to 120 °C, preferably from 30 °C to 100 °C, the temperature being 20 °C above the temperature at which the shape of the container is not changed by filling.

2. The method according to claim 1, **characterized in that** polyvinyl alcohol is used as the water-soluble material.

3. The method according to claim 1 or 2, further comprising sealing the container.

4. The method according to claim 1, **characterized in that** the filling material comprises a washing and/or cleaning agent, in particular consists thereof.

## Revendications

1. Procédé de fabrication d'un contenant destiné à des agents de lavage et/ou de nettoyage à partir d'une matière hydrosoluble, comprenant
a) l'introduction de la matière hydrosoluble dans une partie inférieure (C) d'un outil (A),
b) la thermorégulation éventuelle de l'outil (A), et
c) la fermeture de l'outil (A) en appliquant une partie supérieure (B) de l'outil (A) sur la partie inférieure (C) et l'établissement d'une pression afin de former le contenant, et
d) le remplissage du contenant avec au moins un produit de remplissage, le procédé étant issu du domaine du moulage par compression et le contenant étant tel que sa forme n'est pas modifiée par le remplissage, le contenant restant dans l'outil (A) lors du remplissage et le procédé étant **caractérisé en ce que** le contenant présente, lors du remplissage, une température comprise entre 20 °C et 120 °C, de préférence entre 30 °C et 100 °C, la température étant de 20 °C au-dessus de la température à laquelle la forme du contenant n'est pas modifiée par le remplissage.

2. Procédé selon la revendication 1, **caractérisé en ce que** de l'alcool polyvinylique est utilisé comme matière hydrosoluble.

3. Procédé selon la revendication 1 ou 2, comprenant en outre le scellage du contenant.

4. Procédé selon la revendication 1, **caractérisé en ce que** le produit de remplissage comprend un agent de lavage et/ou de nettoyage, en particulier en est constitué.
